# EUROPEAN PATENT SPECIFICATION

(11) **EP 1 428 801 B1**
(45) Date of publication and mention of the grant of the patent: **23.03.2016**
(21) Application number: 03257800.7
(22) Date of filing: 11.12.2003
(51) Int. Cl.: C03B 11/08

(54) **A COATED MOULDING DIE FOR PRODUCING AN OPTICAL GLASS ELEMENT**
EINE BESCHICHTETE PRESSFORM ZUR HERSTELLUNG EINES OPTISCHEN GLASELEMENTS
MOULE DE PRESSAGE REVÊTU POUR FABRIQUER DES ÉLÉMENTS OPTIQUES EN VERRE

(30) Priority: 13.12.2002 JP 2002361718; 23.07.2003 JP 2003278347
(43) Date of publication of application: 16.06.2004
(73) Proprietor: SUMITA OPTICAL GLASS, INC., Saitama-shi, Saitama 338-8565 (JP)
(72) Inventor: Umetsu, Kiyoharu, c/o Sumita Optical Glass Inc., Saitama-shi, Saitama 330-8565 (JP)
(74) Representative: Boult Wade Tennant

(56) References cited:
- US-A- 4 685 948
- PATENT ABSTRACTS OF JAPAN vol. 013, no. 487 (C-649), 6 November 1989 (1989-11-06) -& JP 01 192733 A (HOYA CORP), 2 August 1989 (1989-08-02)
- PATENT ABSTRACTS OF JAPAN vol. 1998, no. 03, 27 February 1998 (1998-02-27) -& JP 09 295818 A (ASAHI GLASS CO LTD), 18 November 1997 (1997-11-18)
- PATENT ABSTRACTS OF JAPAN vol. 2002, no. 02, 2 April 2002 (2002-04-02) -& JP 2001 302273 A (CANON INC), 31 October 2001 (2001-10-31)
- PATENT ABSTRACTS OF JAPAN vol. 017, no. 001 (C-1014), 5 January 1993 (1993-01-05) -& JP 04 238823 A (KONICA CORP), 26 August 1992 (1992-08-26)
- PATENT ABSTRACTS OF JAPAN vol. 012, no. 387 (C-536), 14 October 1988 (1988-10-14) -& JP 63 134526 A (HOYA CORP; OTHERS: 01), 7 June 1988 (1988-06-07)
- PATENT ABSTRACTS OF JAPAN vol. 013, no. 275 (C-610), 23 June 1989 (1989-06-23) -& JP 01 072931 A (HOYA CORP; OTHERS: 01), 17 March 1989 (1989-03-17)
- PATENT ABSTRACTS OF JAPAN vol. 013, no. 134 (C-581), 4 April 1989 (1989-04-04) -& JP 63 297230 A (HOYA CORP), 5 December 1988 (1988-12-05)
- PATENT ABSTRACTS OF JAPAN vol. 2000, no. 11, 3 January 2001 (2001-01-03) -& JP 2000 219521 A (MATSUSHITA ELECTRIC IND CO LTD), 8 August 2000 (2000-08-08)

## Description

This invention relates to a molding die for producing an optical glass element, which can also be used for molding a phosphate type glass having high reactivity.

Because of requirement for the compactization of optical system equipments such as compact cameras and digital cameras, it has been desired to use a high refractivity index material. Furthermore, for lenses used in the optical communication field has been required a high refractive index and high durability material from the standpoint of the compactization and environment for the use thereof.

As the high refractive index material, there was used the optical glass containing a large amount of lead, but a lead-free optical material has been desired from the environmental pollution problems.

Under the situation, the phosphate glass such for example as K-PSFn1 (commercial name, manufactured by Sumita Optical Glass, Inc., nd; 1.9068) has been developed. K-PSFn1 containing phosphate as a main component and thus having a high softening temperature is very high reactive with molding dies when it is subjected to direct molding.

Recently, when optical glass elements are produced, the direct molding method, in which polishing or the like is not required after the molding of glass, has often been employed, because of its mass productivity. To make precise optical glass elements by the direct molding method, it is required that the glass-molding-surface of the molding die is inactive with a glass at a high temperature, the adhesiveness of the glass to the die is low and the molding die is highly heat-resistant, dense and thermally conductive.

As the above molding die, a die having a coating of an alloy thin film containing platinum or iridium as a main component on glass-molding-surface of a substrate has been proposed (JP-B-63-11285, JP-B-4-16415). However, when the phosphate glass is repeatedly molded by these molding dies, the following faults appear. That is, the phosphorus in the glass diffuses into the coating layer of the molding dies, thus resulting in deterioration of the releasability of the molding dies and the glass. Especially, in the molding of the phosphate glass having a high softening temperature as the above K-PSFn1, the above phenomenon is remarkable.

As a way to increase the bonding strength between the coating layer comprising the molding surface and the substrate material of the molding die, there is a method to make an intermediate coating layer between the coating layer comprising the moulding surface and the substrate material of the molding die (JP-A-10-231129). However, the manufacturing in the technique to provide the intermediate layer is complicated and is disadvantageous in economical manner.

. It is the principal object of the present invention to provide a molding die for producing an optical glass element, which is capable of exhibiting a good releasability between the glass and molding die even in the case of repeatedly molding a phosphate glass having a high reactivity or high softening temperature and a high adhesive strength of a coating layer to various molding die substrates as well as an excellent durability, whereby the above described problems can be solved. JP2001302273 relates to a mold for molding optical - glass element. JP04238823 relates to a press-forming mold.

In the drawings:
Fig. 1 is a cross-sectional view of a model of the molding dies for producing the optical glass element according to the present invention.
Fig. 2 is a cross-sectional view of the model of the molding apparatus of optical elements used in molding tests of Examples.

Chromium, molybdenum and nickel are known as a material for making a film capable of becoming passive state.

The inventor has succeeded in dissolving the above described problems by adopting the following inventions or embodiments.
(1) A molding die according to claim 1.
(2) The molding die according to claim 2.
(3) The use according to claim 3.

In the present invention, the molding die substrate is made of a material having high heat-resistance, denseness, and thermal conductivity, preferable examples of which are hard alloys (such as WC-Co, W-Ni), aluminum oxide, cermets, silicon carbide, and others. Cemented carbides have a feature of high workability, but are somewhat weak in oxidation resistance. Silicon carbide has a defect of high hardness and low workability, but is characterized by a high oxidation resistance, thus resulting in a long service life. Aluminum oxide and cermets are in a intermediate position therebetween. It is preferable that the kind of these substrate materials should suitably be selected depending on the number of lots or kind of glasses to be produced.

In the present invention, an alloy thin film consisting of a first component of molybdenum and a second component of iridium is similar to the above. Therefore, a molding die excellent in durability can be formed without an intermediate layer for increasing the bonding strength between the coating layer forming the molding surface and substrate material of the molding die. Moreover, since a third component selected from the group consisting of an alloy of platinum and rhenium or an alloy of platinum and rhodium is contained, the coating layer also exhibits a high bonding strength to any of the above substrate materials.

The first component in the coating layer is in a proportion of preferably from 20 wt% to 60 wt%, more preferably from 30 wt% to 50 wit%. The second component in the coating layer is in a proportion of preferably from 20 wt% to 60 wt%, more preferably from 30 wt% to 50 wt%.

The third component in the coating layer is in a proportion of from preferably 10 wt% to 40 wt%, more preferably from 20 wt% to 30 wt%. It is preferable that platinum in the coating layer is in a proportion of preferably from 10 wt% to 20 wit%, and it is especially preferable that platinum and rhenium or rhodium are in substantially the same proportions.

The alloy thin film having the above described composition is coated by sputtering on a target prepared by sintering each metallic powder or on a target of the first component or the second component on which the other component chip has been arranged. The proportions of the coating components are controlled by the proportions of the metallic powders making up the target or the size and quantity of the chips. The alloy thin film can also be coated for example, by vapor deposition methods, ion plating methods, and the like in addition to the sputtering methods.

Thickness of the coating layer is preferably from 0.1 *µ*m to 20 *µ*m, since if the coating layer is too thin, it tends readily to be damaged e.g. scratched on handling, and if it is too thick, this is not economical.

By the coating of such an alloy thin film, the molding die can be made up, which can readily be separated from the glass in repeatedly molding the phosphate glass having high reactivity. Furthermore, by using the third component and so on, the molding die can be made up, which can easily be separated from the glass even in repeatedly molding the phosphate glass or the like having high softening temperature. The molding die of the present invention can also be used for molding silica-borate type glass K-PBK40 (commercial name, manufactured by Sumita Optical Glass Inc., refractive index (nd) : 1.5176, Abbe number (*ν*d): 63.5, transformation point Tg: 501°C, yielding point At: 549°C), borate-lanthanum type glass K-VC79 (commercial name, manufactured by Sumita Optical Glass Inc., nd: 1. 6097, *ν*d: 57.8, transformation point Tg: 516°C, yielding point At: 553°C), and borate-zinc type glass K-ZnSF8 (commercial name, manufactured by Sumita Optical Glass Inc., nd: 1.7143, *v*d: 38.9, transformation point Tg: 518°C, yielding point At: 546°C), in addition to the phosphate glass.

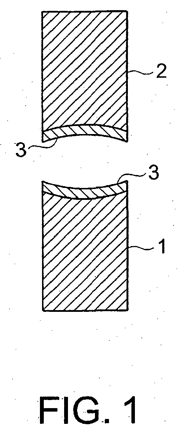

In Fig.1 is shown, in cross section, a model of the molding dies for producing the optical glass element of the present invention, in which 1 and 2 designate substrates of the molding dies, and 3 designates a coating layer.

### Examples

The present invention will now be illustrated in greater detail by the following examples, but the present invention is not intended to be limited by the materials, compositions, and production procedures described therein.

### (Example 1)

Molding dies for producing the optical glass element of the present invention were made by the following manner.

Cemented carbides (WC 99 wt% and the balance Co and so on) having a diameter of 12 mm was worked to give concave surfaces with curvature radiuses of 10 mm and 20 mm, and polished by a diamond paste having a particle size of 0.5 *µ*m to form the molding surfaces in mirror surfaces. By this way, a pair of upper and lower substrates of the molding dies were made and set on a sputtering equipment, followed by coating with alloy thin films having compositions shown in Table 1 in a thickness of 1 µm to prepare a pair of molding dies for producing an optical glass element, shown in Fig. 1.

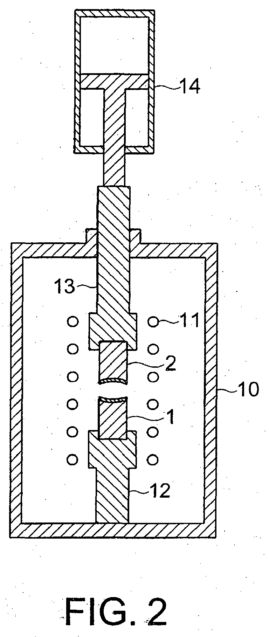

Using the thus obtained dies, two kinds of glasses of a phosphate type glass having low melting point, K-PSK100 (commercial name, manufactured by Sumita Optical Glass Inc., nd: 1.5917, vd: 60.7, transformation point Tg: 390°C, yielding point At: 415°C) and phosphate type glass having high melting point K-PSFn1 ((commercial name, manufactured by Sumita Optical Glass Inc., nd: 1.9068, *ν*d: 21.2, transformation point Tg: 498°C, yielding point At: 543°C), were worked to ball preforms each having a diameter of 7 mm. Overview of the molding machine used in the molding tests is shown in Fig. 2, in which 10 designates a chamber, 11, a heater, 12, a lower axis, 13, an upper axis and 14, an air cylinder.

The ball preform was set between the upper die and the lower die, and nitrogen was charged at a rate of 10 L/min in the chamber 10, and the assembly was subjected to heating to softening point At + 40°C, molding at a load of 3000 N, then cooling down to a temperature of 250°C, and thereafter, the resulting lens was taken out of the assembly.

Results of glass adhesion to the dies and degradation of the coating films after the above described molding procedure was repeated 1000 times are shown in Table 1, with results of comparative examples in which the third component is only platinum. Furthermore, results of comparative examples in which the coating films are formed by the second component and the third component, not including the first component, are shown in Table 1.

Any one of the molding dies examples of the present invention is capable of molding wall the low melting point phosphate type glass, K-PSK100 and in molding of high melting point phosphate type glass. K-PSFn1 with less glass adhesion. Furthermore, results of molding K-PSFn1 in the examples further using platinum and rhenium, or platinum and rhodium, as the third component, are improved.

In the case of the molding dies in which coating films are formed by the second component and the third component, shown as comparative examples, there were found glass adhesion and deterioration of the film in both the cases of K-PSK100 , and K-PSFn1. In comparative examples in which the third component is only platinum, there was found deterioration of the film in both the cases of K-PSK100 and K-PSFn1 and in particular, adhesion of the glass was found in molding K-PSFn1.

**Table 1 Results after molding 1000 times (5)**

| No. | Coating composition (wt%) | | | | | Results after molding 1000 times | | | | Notes |
|---|---|---|---|---|---|---|---|---|---|---|
| | Mo | Ir | Pt | Be | Rh | K-PSK1000 | | K-PSFn1 | | |
| | | | | | | Glass adhesion | Degradation of coating | Glass adhesion | Degradation of coating | |
| 101 | 20 | 70 | 10 | 0 | 0 | Adhered | Degraded | Adhered | Degraded | Comparative example |
| 102 | 30 | 70 | 0 | 0 | 0 | No problem | No problem | Adhered | Degraded | Comparative example |
| 103 | 30 | 60 | 10 | 0 | 0 | No problem | Degraded | Adhered | Degraded | Comparative example |
| 104 | 30 | 60 | 5 | 3 | 0 | No problem | No problem | Adhered | Degraded | This invention |
| 105 | 30 | 50 | 5 | 0 | 0 | No problem | No problem | Adhered | Degraded | This invention |
| 106 | 30 | 50 | 10 | 10 | 0 | No problem | No problem | No problem | No problem | This invention |
| 107 | 30 | 50 | 10 | 0 | 10 | No problem | No problem | No problem | No problem | This invention |
| 108 | 30 | 40 | 15 | 15 | 0 | No problem | No problem | No problem | No problem | This invention |
| 109 | 30 | 40 | 15 | 0 | 25 | No problem | No problem | No problem | No problem | This invention |
| 110 | 30 | 30 | 20 | 20 | 0 | No problem | No problem | No problem | Degraded | This invention |
| 111 | 30 | 30 | 20 | 0 | 20 | No problem | No problem | No problem | Degraded | This invention |
| 112 | 40 | 60 | 0 | 0 | 0 | No problem | No problem | No problem | Degraded | Comparative example |
| 113 | 40 | 50 | 10 | 0 | 0 | No problem | Degraded | No problem | Degraded | Comparative example |
| 114 | 40 | 50 | 5 | 5 | 0 | No problem | No problem | Adhered | Degraded | This invention |
| 115 | 40 | 50 | 5 | 0 | 5 | No problem | No problem | Adhered | Degraded | This invention |
| 116 | 40 | 40 | 10 | 10 | 0 | No problem | No problem | No problem | No problem | This invention |
| 117 | 40 | 40 | 10 | 0 | 10 | No problem | No problem | No problem | No problem | This invention |
| 118 | 40 | 30 | 15 | 15 | 0 | No problem | No problem | No problem | No problem | This invention |
| 119 | 40 | 30 | 15 | 0 | 15 | No problem | No problem | No problem | No problem | This invention |
| 120 | 40 | 20 | 20 | 20 | 0 | No problem | No problem | Adhezed | Degraded | This invention |
| 121 | 40 | 20 | 20 | 0 | 20 | No problem | No problem | Adhered | Dagraded | This invention |
| 122 | 50 | 50 | 0 | 0 | 0 | No problem | No problem | Adhered | Degraded | Comparative example |
| 123 | 50 | 40 | 10 | 0 | 0 | No problem | Degraded | Adhered | Degraded | Comparative example |
| 124 | 50 | 40 | 5 | 5 | 0 | No problem | No problem | Adhered | Degraded | This invention |
| 125 | 50 | 40 | 5 | 0 | 5 | No problem | No problem | Adhered | Degraded | This invention |
| 126 | 50 | 30 | 10 | 10 | 0 | No problem | No problem | No problem | No problem | This invention |
| 127 | 50 | 30 | 10 | 0 | 10 | No problem | No problem | No problem | No problem | This invention |
| 128 | 50 | 20 | 15 | 15 | 0 | No problem | No problem | Adhered | Degraded | This invention |
| 129 | 50 | 20 | 15 | 0 | 15 | No problem | No problem | Adhered | Degraded | This invention |
| 130 | 60 | 60 | 0 | 0 | 0 | No problem | No problem | Adhered | Degraded | Comparative example |
| 131 | 60 | 30 | 10 | 0 | 0 | No problem | Degraded | Adhered | Degraded | Comparative example |
| 132 | 0 | 50 | 50 | 0 | 0 | Adhered | Degraded | Adhered example | Degraded | Comparative |
| 133 | 0 | 50 | 0 | 50 | 0 | Adhered | Degraded | Adhered | Degraded | Comparative example |
| 134 | 0 | 50 | 0 | 0 | 50 | Adhered | Degraded | Adhered | Degraded | comparative example |
| 135 | 0 | 0 | 50 | 50 | 0 | Adhered | Degraded | Adhered | Degraded | Comparative example |
| 136 | 0 | 0 | 50 | 0 | 50 | Adhered | Degraded | Adhered | Degraded | Comparative example |
| 137 | 0 | 0 | 0 | 50 | 50 | Adhered | Degraded | Adhered | Degraded | Comparative example |

### (Example 2)

Cemented carbides, aluminum oxide, cermets, and silicon carbide were worked in the forms shown in Example 1 to obtain substrates of the molding dies and coated with coating layers having compositions shown in Table 2 with a thickness of 1 µm. Using these dies, by the same molding machine and conditions as In Example 1, K-PSFn1 was molded 1000 times. Results are shown in Table 2.

All examples of using substrate materials of molding dies made of cemented carbides, aluminum oxide, cermets, and silicon carbide gave good results without degradation of the coating layers and occurrence of glass adhesion.

**Table 2 Results after molding 1000 times (7)**

| No· | Coating composition (wt%) | | | | | Kind of molding substrate material | Results after molding 1000 times |
|---|---|---|---|---|---|---|---|
| | Mo | Ir | Pt | Re | Rh | | |
| 174 | 30 | 50 | 10 | 10 | 0 | Cemented carbide | No problem |
| 175 | 30 | 50 | 10 | 10 | 0 | Aluminum oxide | No problem |
| 176 | 30 | 50 | 10 | 10 | 0 | Cermet | No problem |
| 177 | 30 | 50 | 10 | 10 | 0 | Silicon carbide | No problem |
| 178 | 30 | 50 | 10 | 0 | 10 | Demented carbide | No problem |
| 179 | 30 | 50 | 10 | 0 | 10 | Aluminum oxide | No problem |
| 180 | 30 | 50 | 10 | 0 | 10 | Cermet | No problem |
| 181 | 30 | 50 | 10 | 0 | 10 | Silicon carbide | No problem |
| 182 | 30 | 40 | 15 | 15 | 0 | Cemented carbide | No problem |
| 183 | 30 | 40 | 15 | 15 | 0 | Aluminum oxide | No problem |
| 184 | 30 | 40 | 15 | 15 | 0 | Cermet | No problem |
| 185 | 30 | 40 | 15 | 15 | 0 | Silicon carbide | No problem |
| 186 | 30 | 40 | 15 | 0 | 15 | Cemented carbide | No problem |
| 187 | 30 | 40 | 15 | 0 | 15 | Aluminum oxide | No problem |
| 188 | 30 | 40 | 15 | 0 | 15 | Cermet | No problem |
| 189 | 30 | 40 | 15 | 0 | 15 | Silicon carbide | No problem |
| 190 | 40 | 40 | 10 | 10 | 0 | Cemented carbide | No problem |
| 191 | 40 | 40 | 10 | 10 | 0 | Aluminum oxide | No problem |
| 192 | 40 | 40 | 10 | 10 | 0 | Cermet | No problem |
| 193 | 40 | 40 | 10 | 10 | 0 | Silicon carbide | No problem |
| 194 | 40 | 40 | 10 | 0 | 10 | Cemented carbide | No problem |
| 195 | 40 | 40 | 10 | 0 | 10 | Aluminum oxide | No problem |
| 196 | 40 | 40 | 10 | 0 | 10 | Cermet | No problem |
| 197 | 40 | 40 | 10 | 0 | 10 | Silicon carbide | No problem |
| 198 | 50 | 30 | 10 | 10 | 0 | Cemented carbide | No problem |
| 199 | 50 | 30 | 10 | 10 | 0 | Aluminum oxide | No problem |
| 200 | 50 | 30 | 10 | 10 | 0 | Cermet | No problem |
| 201 | 50 | 30 | 10 | 10 | 0 | Silicon carbide | No problem |
| 202 | 50 | 30 | 10 | 10 | 10 | Cemented carbide | No problem |
| 203 | 50 | 30 | 10 | 0 | 10 | Aluminum oxide | No problem |
| 204 | 50 | 30 | 10 | 0 | 10 | Cermet | No problem |
| 205 | 50 | 30 | 10 | 0 | 10 | Silicon carbide | No problem |

Even in repeatedly molding phosphate glass, especially even in repeatedly molding phosphate glass having high softening temperature, the molding die of the present invention does not meet with deterioration of the releasability between the molding die and glass due to diffusing of the phosphorus in the glass through the coating layer of the molding die even in repeatedly molding the phosphate glass, in particular, the phosphate glass having a higher softening temperature. Therefore, the glass does not adhere to the die, so that it is possible to mold high precise optical elements.

Furthermore, in the present invention, the coating layer i.e. the alloy thin film exhibits higher adhesive strength to any one of cemented carbides, aluminum oxide, cermets, and silicon carbide, so an intermediate layer is not needed, and the substrate material of the molding die can be selected depending on the lot number of the optical elements or the kind of glass to be produced. Therefore, the molding die can be made with a low cost, and greatly serves to progress the industry.

## Claims

1. A molding die for producing an optical glass element which has a coating layer on an optical glass element molding surface of a substrate having high heat-resistance, denseness and thermal conductivity, in which the coating layer comprises a first component, a second component and a third component, **characterised by** the first component being of molybdenum, the second component being of iridium, and the third component being of platinum and rhenium or platinum and rhodium.

2. The molding die according to claim 1, wherein the coating layer comprises 30-50 wt% molybdenum, 20-60 wt% iridium and 10-40 wt% platinum and rhenium or platinum and rhodium.

3. The use of the molding die as defined in any of claims 1 or 2 for producing an optical glass element.

## Patentansprüche

1. Gussform zur Herstellung eines optischen Glaselements, welche eine Deckschicht an einer optischen Glaselement-Gussoberfläche eines Substrates aufweist, welches eine hohe Wärmebeständigkeit, Dichte und thermische Leitfähigkeit aufweist, wobei die Deckschicht eine erste Komponente, eine zweite Komponente und eine dritte Komponente umfasst, **dadurch gekennzeichnet, dass** die erste Komponente aus Molybdän besteht, die zweite Komponente aus Iridium besteht und die dritte Komponente aus Platin und Rhenium oder Platin und Rhodium besteht.

2. Gussform nach Anspruch 1, wobei die Deckschicht 30-50 Gew% Molybdän, 20-60 Gew% Iridium und 10-40 Gew% Platin und Rhenium oder Platin und Rhodium umfasst.

3. Verwendung der Gussform, wie in einem der Ansprüche 1 oder 2 definiert, zur Herstellung eines optischen Glaselements.

## Revendications

1. Matrice de moulage pour produire un élément en verre optique qui a une couche de revêtement sur une surface de moulage d'élément en verre optique d'un substrat ayant une résistance à la chaleur, une densité et une conductivité thermique élevées, où la couche de revêtement comprend un premier composant, un deuxième composant et un troisième composant, **caractérisée en ce que** le premier composant étant en molybdène, le deuxième composant étant en iridium et le troisième composant étant en platine et rhénium ou en platine et rhodium.

2. Matrice de moulage selon la revendication 1, dans laquelle la couche de revêtement comprend de 30 à 50 % en poids de molybdène, de 20 à 60 % en poids d'iridium et de 10 à 40 % en poids de platine et de rhénium ou de platine et de rhodium.

3. Utilisation de la matrice de moulage telle que définie dans l'une des revendications 1 ou 2 pour la production d'un élément en verre optique.
